# EUROPEAN PATENT SPECIFICATION

(11) **EP 1 912 521 B1**
(45) Date of publication and mention of the grant of the patent: **12.07.2017**
(21) Application number: 06795637.5
(22) Date of filing: 11.08.2006
(51) Int. Cl.: A23L 3/3418, A23L 3/36, A23L 3/375, A23B 7/148, A23B 7/055, A23B 7/04, A23B 4/06, A23B 4/16, F25D 17/04, F25D 17/06

(54) **A COOLING DEVICE**
KÜHLVORRICHTUNG
DISPOSITIF DE REFROIDISSEMENT

(30) Priority: 12.08.2005 TR 200503246
(43) Date of publication of application: 23.04.2008
(73) Proprietor: Arçelik Anonim Sirketi, 34950 Istanbul (TR)
(72) Inventor: OZKADI, Fatih, 34950 Istanbul (TR)
(86) International application number: PCT/IB2006/052781
(87) International publication number: WO 2007/020581

(56) References cited:
- EP-A1- 0 368 678
- EP-A1- 0 398 232
- DD-A1- 219 377
- DE-A1- 2 500 374
- JP-A- 3 091 680
- JP-A- 4 093 580
- JP-A- 5 005 585
- JP-A- 5 288 463
- US-A- 4 961 322
- US-A- 5 799 495
- US-A1- 2002 033 023

## Description

The present invention relates to a cooling device comprising a storage compartment that provides the storing of the food items placed inside without being deteriorated and containing nitrogen-enriched air produced by a nitrogen generator.

The most suitable medium for the growth and reproduction of microorganisms is the food that is kept uncovered. When the necessary precautions are not taken in storing food, the microorganisms multiply rapidly leading to the deterioration, changing of color and the forming of bad odors due to decaying. Storing food in cooling devices prolong the time period for the deterioration of food, however completely eradicating the microorganisms that decay food is not possible.

There is a considerable effect of the ambient atmosphere on the stored foods. In cooling devices, some bacteria become active within the temperature range of 0ºC to 5ºC, leading to bad odors, deterioration and shortening in the shelf life of foods. In order to prevent this deterioration, there are environmentally insulated storage compartments in cooling devices, particularly for storing fresh food such as fruit and vegetables. In cooling devices utilizing this type of storage compartments, the deterioration time and hence the shelf life of fresh foods is prolonged.

Various environmentally insulated storage compartments with enriched nitrogen gas delivered inside have been devised in the cooling compartments of the cooling devices in order to store food for a longer period of time.

In state-of-the-art United States Patent no. US4961322, a cooling device is described which comprises a storage compartment for storing fresh food that has a box surrounding said storage compartment, a nitrogen-rich gas supplying means, wherein the temperature, humidity and the gas values are controlled.

Another state-of-the-art implementation is described in the Japanese Patent Application no. JP05005585. In this implementation, a storage case in a cooling device is provided with nitrogen-enriched air, the oxygen gas derived during the separation of nitrogen from the air is discharged.

In state of the art, Korean patent application document no KR20040092316 and KR20040083641 a cooling device in accordance with the preamble of claim 1 has been disclosed.

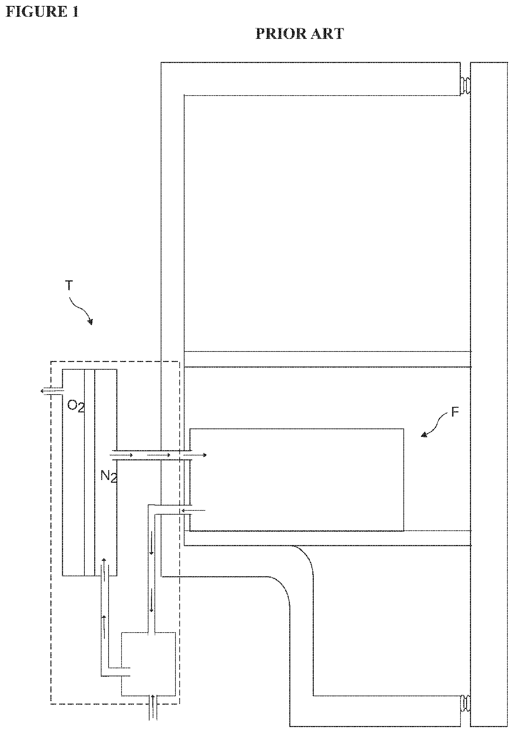

In all these implementations, a nitrogen generator (T) is utilized for producing nitrogen-enriched air. The nitrogen generator (T) comprises a pump for sucking and pumping of the air. The air sucked in by the pump is delivered to the nitrogen generator (T). The nitrogen gas within the content of the air delivered to the nitrogen generator (T) is separated from other gases in the air by various methods and nitrogen-enriched air is produced. The nitrogen enriched air is delivered to the storage compartment (F) by the pump, and the nitrogen depleted air left with a high oxygen content is discharged from the nitrogen generator (T) (Figure 1).

The object of the present invention is to design a cooling device comprising a nitrogen generator with an enhanced efficiency, which provides nitrogen-enriched air for the storage compartment.

The cooling device designed to fulfill the objectives of the present invention, explicated in the first and the respective claims, comprises two separate storage compartment, insulated from their ambient surroundings, containing oxygen and nitrogen enriched air, wherein the air inside the compartments is controlled by monitoring the humidity and gas contents.

When the nitrogen generator is operating, the extracted nitrogen-enriched air is delivered into a storage compartment, and the air containing oxygen is delivered into a second storage compartment. Consequently two storage compartments can be utilized separately wherein the oxygen and nitrogen gasses are collected by using only the nitrogen generator.

While the extracted nitrogen gas is used in the storage compartment utilizing the nitrogen-enriched air, the oxygen gas derived during the extraction of the nitrogen gas, which is discharged out in the state-of-the-art implementations, is delivered to the storage compartment utilizing the oxygen-enriched air. Accordingly, utilizing an oxygen generator is not necessary for the storage compartment wherein the oxygen-enriched air is used or it is utilized with a lower capacity. Consequently the efficiency of the nitrogen generator is enhanced, economizing both energy and time.

Without making any modifications on the nitrogen generator, by only delivering the by product oxygen gas derived during the extraction of nitrogen from the air to the storage compartment wherein the oxygen enriched air will be used, the said storage compartment can be effectively utilized for storing special food items.

Delivering the nitrogen and oxygen gases to both of the storage compartments containing the nitrogen-enriched air and the oxygen-enriched air is provided by a control card, enabling the atmospheric control of these storage compartments.

By way of the present invention, the vegetal food products in the storage compartment containing nitrogen-enriched air, and animal food products in the storage compartment containing oxygen-enriched air can be stored for a long period of time without any discoloration and/ or formation of bad odors.

The cooling device designed to fulfill the objectives of the present invention is illustrated in the attached figures, where:
Figure 1 - is the schematic view of a prior state-of-the-art cooling device.
Figure 2 - is the sideways schematic view of a cooling device.
Figure 3 - is the schematic view of another embodiment of the present invention.

Elements shown in figures are numbered as follows:
1. Cooling device
2. Nitrogen-enriched storage compartment
3. Oxygen-enriched storage compartment
4. Nitrogen generator
5. Pump
6. Nitrogen chamber
7. Oxygen chamber
8. 18. Transmission pipe
9. 19. Valve

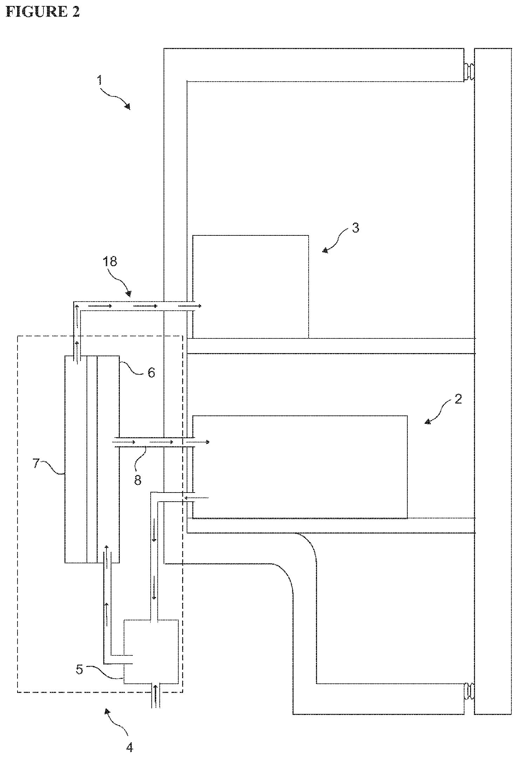

The cooling device (1) of the present invention comprises a nitrogen-enriched storage compartment (2) containing nitrogen-enriched air, an oxygen-enriched storage compartment (3) containing oxygen-enriched air, and a nitrogen generator (4) that delivers the nitrogen-enriched air derived as a result of the extraction of nitrogen from the aspirated air to the nitrogen-enriched storage compartment (2) and the oxygen-enriched air derived as a result of the extraction of nitrogen from the aspirated air to the oxygen-enriched storage compartment (3) (Figure 2).

The nitrogen generator (4) comprises a pump (5) that provides the suction of air, a nitrogen chamber (6) containing the nitrogen extracted from the air, a transmission pipe (8), one end of which extends to the nitrogen-enriched storage compartment (2) and the other end to the nitrogen chamber (6) providing to deliver the nitrogen gas to the nitrogen-enriched storage compartment (2), and an oxygen chamber (7) containing the oxygen gas derived during the process of extracting nitrogen gas from the sucked air.

The nitrogen gas is extracted from the sucked air by means of the operation of the pump (5) in the nitrogen generator (4), the extracted nitrogen gas is collected in the nitrogen chamber (6) to be delivered to the nitrogen-enriched storage compartment (2) when necessary. The oxygen gas derived during the extraction of nitrogen gas from the air is collected in the oxygen chamber (7) and when necessary is delivered to the oxygen-enriched storage compartment (3).

The nitrogen generator (4) comprises a transmission pipe (18), one end of which extends to the oxygen chamber (7) and the other end to the oxygen-enriched storage compartment (3), providing to deliver the oxygen gas derived during the extraction of nitrogen from the sucked air to the oxygen-enriched storage compartment (3) (Figure 2).

By way of using the transmission pipe (18), one end of which extends to the oxygen chamber (7) and the other end to the oxygen-enriched storage compartment (3), the gasses necessary for the nitrogen-enriched storage compartment (2) and the oxygen-enriched storage compartment (3) can be provided by only utilizing a nitrogen generator (4) without the need for utilizing an oxygen generator. The air circulation in the oxygen-enriched storage compartment (3) is provided by a check-valve (not shown in figures) that opens or closes in response to the pressure value in the compartment (3).

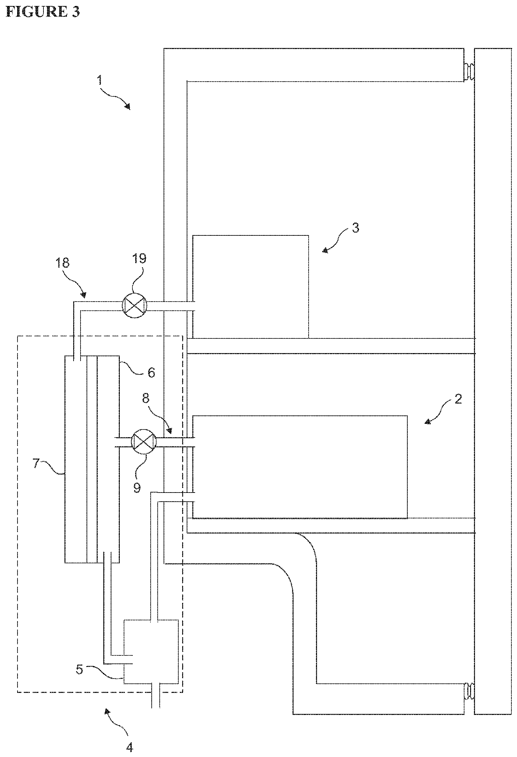

In another embodiment of the present invention, the cooling device (1) comprises a valve (9) situated on the transmission pipe (8) that delivers the nitrogen gas collected in the nitrogen chamber (6) to the nitrogen-enriched storage compartment (2), providing the controlled delivery of nitrogen and a second valve (19) situated on the transmission pipe (18) that delivers the oxygen gas collected in the oxygen chamber (7) to the oxygen-enriched storage compartment (3), providing the controlled delivery of oxygen (Figure 3).

When the gas concentration in the nitrogen and oxygen enriched storage compartments (2 and 3) is detected not to be within predetermined values, both of the valves (9, 19) are opened or closed by a control card that controls the electrical functions, providing the atmospheric control of the nitrogen and oxygen enriched storage compartments (2 and 3).

By way of the present invention, vegetal food products such as fresh vegetables, fruit etc. can be stored in the nitrogen-enriched storage compartment (2), and animal food products such as fresh meat, fish etc. can be stored in the oxygen-enriched storage compartment (3) and the shelf lives of these food products can be extended.

## Claims

1. A cooling device (1) comprising a nitrogen-enriched storage compartment (2) containing nitrogen-enriched air, an oxygen-enriched storage compartment (3) containing oxygen-enriched air and a nitrogen generator (4) that delivers the nitrogen-enriched air derived as a result of nitrogen extraction from the sucked air to the nitrogen-enriched storage compartment (2) and the oxygen-enriched air derived as a result of the nitrogen extraction from the sucked air to the oxygen-enriched storage compartment (3), **characterized in that** the nitrogen generator (4) comprises a pump (5) that provides the suction of the ambient air, a nitrogen chamber (6) wherein the extracted nitrogen is collected to be delivered to the nitrogen enriched storage compartment (2), and an oxygen chamber (7) wherein the oxygen gas derived during the process of extracting nitrogen gas from the aspirated air is collected to be delivered to the oxygen-enriched storage compartment (3).

2. A cooling device (1) as in Claim 1, **characterized by** a nitrogen generator (4) comprising a transmission pipe (8), one end of which extends to the nitrogen-enriched storage compartment (2) and the other end to the nitrogen chamber (6) which provides to deliver the nitrogen gas to the nitrogen-enriched storage compartment (2).

3. A cooling device (1) as in Claim 1 or 2, **characterized by** a nitrogen generator (4) comprising a transmission pipe (18), one end of which extends to the oxygen chamber (7), and the other end to the oxygen-enriched storage compartment (3), which provides to deliver the oxygen gas to the oxygen-enriched storage compartment (3).

4. A cooling device (1) as in any one of the above claims, **characterized by** a valve (9) situated on the transmission pipe (8), which provides to control the air inside the nitrogen-enriched storage compartment (2) by opening or closing when the gas concentration in the nitrogen-enriched storage compartment (2) is detected not to be within predetermined values.

5. A cooling device (1) as in any one of the above claims, **characterized by** a valve (19) situated on the transmission pipe (18) that provides to control the air inside the oxygen enriched storage compartment (3) by opening or closing when the gas concentration in the oxygen-enriched storage compartment (3) is detected not to be within predetermined values.

## Patentansprüche

1. Eine Kühlvorrichtung (1), umfassend ein mit Stickstoff angereichtes Speicherfach (2), das mit Stickstoff angereichte Luft beinhaltet, ein mit Sauerstoff angereichtes Speicherfach (3), das mit Sauerstoff angereichte Luft beinhaltet, und einen Stickstoffgenerator (4), der mit als eine Folge des Extraktions des Stickstoffs aus der angesaugten Luft erhaltenen mit Stickstoff angereichte Luft in das mit Stickstoff angereichtes Speicherfach (2) und mit als eine Folge des Extraktions des Stickstoffs aus der angesaugten Luft erhaltenen mit Sauerstoff angereichte Luft in das mit Sauerstoff angereichtes Speicherfach (3) liefert, **dadurch gekennzeichnet, dass** der Stickstoffgenerator (4) eine Pummpe (5), die das Ansaugen der Umgebugsluft gewährleistet, eine Nitrogenkammer (6), in welcher das extrahierte Nitrogen gesammelt wird, um es in das mit Stickstoff angereichtes Speicherfach (2) zu liefern und eine Sauerstoffkammer (7), in welcher das Sauerstoffgas, das beim Extrahieren des aus angesaugter Luft abgesaugte Nitrogengases erhalten wird, gesammelt wird, um in das mit Sauerstoff angereichtes Speicherfach (3) zu liefern, umfasst.

2. Eine Kühlvorrichtung (1) nach Anspruch 1 **gekennzeichnet durch** einen Stickstoffgenerator (4), der ein Überleitungsrohr (8) umfasst, dessen eine Ende an das mit Stickstoff angereichtes Speicherfach (2) erstreckt und dessen andere Ende das Liefern des Nitrogengases in das mit Stickstoff angereichtes Speicherfach (2) sicherstellt.

3. Eine Kühlvorrichtung (1) nach Anspruch 1 oder 2 **gekennzeichnet durch** einen Stickstoffgenerator (4), der ein Überleitungsrohr (18) umfasst, dessen eine Ende an die Sauerstoffkammer (7) und dessen andere Ende an das mit Sauerstoff angereichtes Speicherfach (3) erstrecken und der das Liefern des Sauerstoffgases in das mit Sauerstoff angereichtes Speicherfach (3) sicherstellt.

4. Eine Kühlvorrichtung (1) nach einem der vorgehenden Ansprüche **gekennzeichnet durch** ein Ventil (9), das auf dem Überleitungsrohr (8) platziert ist und die Überwachung der Luft im mit Stickstoff angereichtes Speicherfach (2) durch Einschalten oder Ausschalten sicherstellt, wenn man feststellt, dass die Gaskonzentration im mit Stickstoff angereichtes Speicherfach (2) nicht im Bereich der vorbestimmten Werte liegt.

5. Eine Kühlvorrichtung (1) nach einem der vorgehenden Ansprüche **gekennzeichnet durch** ein Ventil (19), das auf dem Überleitungsrohr (18) platziert ist, und die Überwachung der Luft im mit Sauerstoff angereichtes Speicherfach (3) durch Einschalten oder Ausschalten sicherstellt, wenn man feststellt, dass die Gaskonzentration im mit Sauerstoff angereichtes Speicherfach (3) nicht im Bereich der vorbestimmten Werte liegt.

## Revendications

1. Un dispositif de refroidissement (1) comprenant un compartiment de stockage enrichi en azote (2) contenant de l'air enrichi en azote, un compartiment de stockage enrichi en oxygène (3) contenant de l'air enrichi en oxygène et un générateur d'azote (4) qui délivre de l'air enrichi en azote dérivé par suite de l'extraction d'azote de l'air aspiré dans le compartiment de stockage enrichi en azote (2) et de l'air enrichi en oxygène dérivé par suite de l'extraction d'azote de l'air aspiré vers le compartiment de stockage enrichi en oxygène (3), **caractérisé en ce que** le générateur d'azote (4) comprend une pompe (5) qui fournit l'aspiration de l'air ambiant, une chambre d'azote (6) dans laquelle l'azote extrait est collecté pour être délivré au compartiment de stockage enrichi en azote (2) et une chambre d'oxygène (7) dans laquelle le gaz d'oxygène dérivé lors du processus d'extraction d'azote gazeux provenant de l'air aspiré est collecté pour être envoyé dans le compartiment de stockage enrichi en oxygène (3).

2. Un dispositif de refroidissement (1) selon la revendication 1, **caractérisé par** un générateur d'azote (4) comprenant un tuyau de transmission (8), dont une extrémité s'étend jusqu'au compartiment de stockage enrichi en azote (2) et l'autre extrémité à la chambre d'azote (6) qui fournit pour délivrer l'azote gazeux au compartiment de stockage enrichi en azote (2).

3. Un dispositif de refroidissement (1) selon la revendication 1 ou 2, **caractérisé par** un générateur d'azote (4) comprenant un tuyau de transmission (18), dont une extrémité s'étend jusqu'à la chambre à oxygène (7) et l'autre extrémité au compartiment de stockage enrichi en oxygène (3), qui fournit pour délivrer le gaz oxygène au compartiment de stockage enrichi en oxygène (3).

4. Un dispositif de refroidissement (1) selon l'une quelconque des revendications précédentes, **caractérisé par** une soupape (9) située sur le tuyau de transmission (8), qui permet de commander l'air à l'intérieur du compartiment de stockage enrichi en azote (2) en ouvrant ou fermant lorsque la concentration de gaz dans le compartiment de stockage enrichi en azote (2) est détectée pour ne pas être dans des valeurs prédéterminées.

5. Un dispositif de refroidissement (1) selon l'une quelconque des revendications précédentes, **caractérisé par** une soupape (19) située sur le tuyau de transmission (18) qui permet de commander l'air à l'intérieur du compartiment de stockage enrichi en oxygène (3) en ouvrant ou en fermant lorsque la concentration de gaz dans le compartiment de stockage enrichi en oxygène (3) est détectée pour ne pas êtredans des valeurs prédéterminées.
